# EUROPEAN PATENT SPECIFICATION

(11) **EP 0 263 705 B1**
(45) Date of publication and mention of the grant of the patent: **30.06.1993**
(21) Application number: 87308908.0
(22) Date of filing: 07.10.1987
(51) Int. Cl.: C08L 67/02, C08K 5/10, C08K 5/34, B29D 22/00, C08J 5/18

(54) **The use of thermoplastic polyester resin composition for UV-screening**
Verwendung einer Zusammensetzung vom thermoplastischem Polyesterharz als UV-Absorber
L'usage de composition de résine polyester thermoplastique pour UV-absorption

(30) Priority: 07.10.1986 JP 238686/86
(43) Date of publication of application: 13.04.1988
(73) Proprietor: MITSUBISHI KASEI CORPORATION, Tokyo 100 (JP)
(72) Inventor: Hirahara, Takuji, Yokohama-shi Kanagawa-ken (JP); Nakamura, Takashi, Sagamihara-shi Kanagawa-ken (JP); Aoyama, Yoshiko 201 Haitsu-Amano, Yokohama-shi Kanagawa-ken (JP); Maeda, Shuichi, Iruma-gun Saitama-ken (JP)
(74) Representative: Woods, Geoffrey Corlett

(56) References cited:
- EP-A- 0 156 966
- DE-A- 1 769 425
- GB-A- 1 124 536
- GB-A- 1 147 232
- GERMAN PATENT APPLICATION, W 10860, published 23rd June 1955 (WINGFONT CO.)
- PATENT ABSTRACTS OF JAPAN, vol. 9, no. 233 (C-304)(1956) 19th September 1985

## Description

The present invention relates to thermoplastic polyester resin compositions, and to the use of certain compounds in thermoplastic resin compositions to provide ultraviolet screening thereof.

Due to the excellent mechanical properties and chemical specificities of polyesters represented by polyethylene terephthalate, polyesters have been broadly used for fibers, films, etc. Moreover, due to the excellent transparency, the gas-barrier property and the safety and sanitation properties of polyesters, the suitability of polyesters as the material for containers of carbonated-beverage drinks, fruit juice drinks, liquid seasonings, edible oils, liquors and wines has attracted attention in recent years. Still more, from the viewpoint of energy-saving and as a countermeasure for earthquakes, a new use of polyester films has developed. This is to stick a polyester film to windows for screening heat-radiation or for preventing glass scattering. Besides, in the field of agriculture and horticulture, there is strong demand for a transparent film selectively screening ultraviolet light (UV light) of a specified wavelength range in order to provide growth-promotion and increase the harvest of the crops, as described, for instance, in JP-A-53-98242 (1978).

Although these polyester containers and films are excellent in screening UV light up to 320 nm wavelength, they are almost transparent to visible and UV light or they almost transmit visible and UV light at a longer wavelength range. For instance, in the case where an edible oil or a liquid seasoning such as sweet sake or a dressing is filled in a polyester container and the container is kept for a few months, there are many cases where deterioration of the contents of the container, for instance a delicate change of the colour, taste and flavour, occurs gradually according to the preserving conditions and the foodstuff.

Although deterioration of the contents of the container is due to external causes such as oxygen, heat, light (particularly ultraviolet) or microorganisms, in the case of a polyester container, since it has a relatively excellent oxygen gas-barrier property, if it is possible to improve further the ultraviolet screening property of the container it becomes possible to prevent remarkably the deterioration of the contents, even over a long time.

Furthermore, when using a polyester film for sticking to a window, for instance, when the UV light in sunlight is transmitted, discoloration of the fixtures within a house, such as furniture, books and household implements, occurs. Accordingly, it is necessary to reduce the transmittance to the minimum or to completely screen out the UV light. In the case of mulching cultivation in agriculture and horticulture, it is known that it is possible to promote the growth of many useful plants and that crops of high quality can be harvested early and in large amounts by mulching with a transparent coating material which substantially screens out the transmittance of UV light of a wavelength of not longer than 370 nm, as disclosed, for instance, in JP-A-53-124556 (1978).

At present an ultraviolet absorbing agent is generally added to the polyester. However, the ultraviolet absorbing agent is generally expensive and the adding step is complicated. Moreover, such ultraviolet absorbing agents generally sublimate or have poor heat-stability. Thus there are cases of trouble being caused in the adding step and at the time of mold-processing, and there is a fear that the agent may move to the contents of the container when the agent is used in a container for packaging a foodstuff. Consequently the use of such an ultraviolet absorbing agent is not necessarily favourable.

As a result of the present inventors' earnest studies, a thermoplastic polyester resin composition has been found which can sufficiently screen UV light in the longer wavelength range as well as UV light in the shorter wavelength range.

The present invention provides the use of at least one naphthalenetetracarboxylic acid, acid anhydride thereof, imide thereof or ester thereof as an ultraviolet screening agent in a thermoplastic polyester resin composition.

The present invention also provides a thermoplastic polyester resin composition wherein:
(a) the thermoplastic polyester consists essentially of (i) a dicarboxylic acid component consisting of units derived from terephthalic acid and, optionally, not more than 20mol% units derived from other aromatic dicarboxylic acids, esters of aromatic dicarboxylic acids, cycloaliphatic dicarboxylic acids or esters thereof, aliphatic dicarboxylic acids or esters thereof or unsaturated dicarboxylic acids or esters thereof, and (ii) a glycol component consisting of units derived from ethylene glycol and, optionally, not more than 20mol% units derived from other aliphatic glycols, cycloaliphatic glycols, bisphenol derivatives or glycols represented by the formula 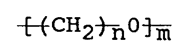 wherein n is an integer of 1 to 6 and m is an integer of not less than 4, and
(b) an imide of a naphthalenetetracarboxylic acid is present in an amount effective to act as an ultraviolet screening agent, the naphthalene ring of the said imide being unsubstituted or substituted by up to 4 substituents chosen from a halogen atom, a hydroxyl group, a nitro group, a cyano group, a carboxyl group, a sulfonic acid group or a salt thereof, an alkyl group which may be substituted, an alkoxy group which may be substituted, an alkenyl group which may be substituted, an aryl group which may be substituted, an aralkyl group which may be substituted and an alkylaralkyl group which may be substituted.

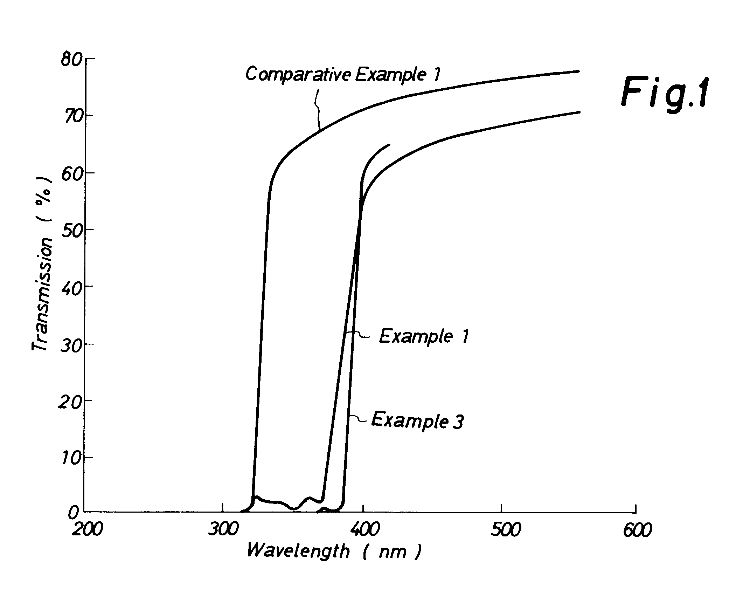

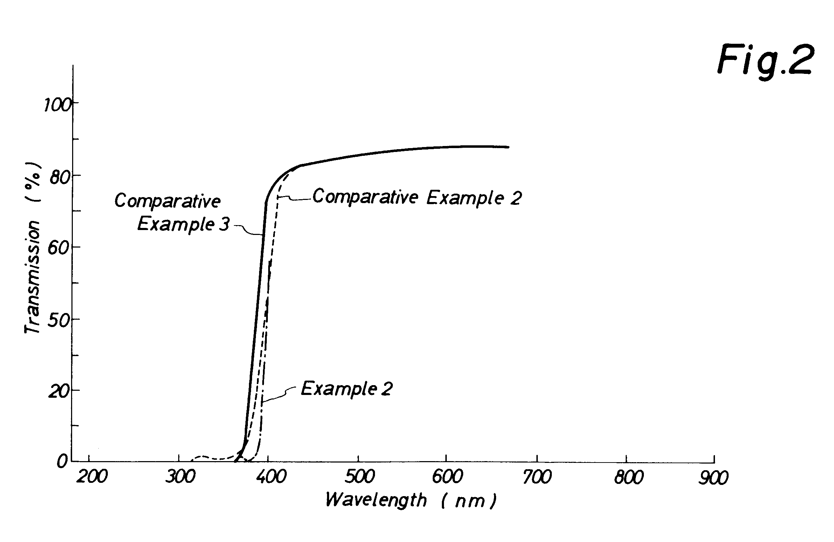

In the attached drawings, Fig. 1 shows the light transmissivity of the thermoplastic polyester resin compositions obtained in Examples 1 and 3 and Comparative Example 1, and Fig. 2 shows the light transmissivity of the thermoplastic polyester resin compositions obtained in Example 2 and Comparative Examples 2 and 3.

The compound which is added to the polyester resin is a naphthalenetetracarboxylic acid, acid anhydride thereof, imide thereof or ester thereof, which has a framework composed of a naphthalenetetracarboxylic acid moiety.

As the naphthalenetetracarboxylic acid, naphthalene-1,4,5,8-tetracarboxylic acid, naphthalene-1,3,5,7-tetracarboxylic acid, naphthalene-1,2,5,6-tetracarboxylic acid, naphthalene-2,3,6,7-tetracarboxylic acid, naphthalene-1,3,6,8-tetracarboxylic acid, naphthalene-1,4,6,7-tetracarboxylic acid, naphthalene-1,2,4,5-tetracarboxylic acid, naphthalene-1,3,4,5-tetracarboxylic acid and naphthalene-1,2,3,4-tetracarboxylic acid may be exemplified. An acid anhydride of the above-mentioned acids may be used. Naphthalene-1,4,5,8-tetracarboxylic acid or the acid anhydride thereof is preferred.

Various esters of the naphthalenetetracarboxylic acid may be used. However, an alkyl ester, such as a methyl ester, ethyl ester, propyl ester or butyl ester, is preferred. Tetramethyl naphthalene-1,4,5,8-tetracarboxylate, tetraethyl naphthalene-1,4,5,8-tetracarboxylate, tetrapropyl naphthalene-1,4,5,8-tetracarboxylate, tetrabutyl naphthalene-1,4,5,8-tetracarboxylate, tetramethyl naphthalene-1,3,5,7-tetracarboxylate and tetramethyl naphthalene-1,3,6,8-tetracarboxylate may be exemplified. Furthermore, the carboxyl groups situated in adjacent positions on the naphthalene ring, such as in naphthalene-1,3,6,8-tetracarboxylic acid, may form an anhydride ring.

A compound having both an anhydride ring and an ester bond, such as the 3,6-dimethyl ester of naphthalene-tetracarboxylic acid 1,8-anhydride, may be used.

Any imides of naphthalenetetracarboxylic acid may be used as the imide compound. Such an imide can, for example, be produced by reacting naphthalene-1,4,5,8-tetracarboxylic acid or an acid derivative thereof with ammonia; an aliphatic aminocarboxylic acid such as glycine, alanine, valine or ε-aminocaproic acid; an aminoalcohol; an aromatic aminocarboxylic acid such as o-aminobenzoic acid, m-aminobenzoic acid and p-aminobenzoic acid; and a diamine.

Since the imide compound, particularly a diimide compound, has excellent heat-resistance as compared to the afore-mentioned tetracarboxylic acids, acid anhydrides thereof and esters thereof, the imide compound, particularly the diimide compound, is particularly preferred.

Preferred diimide compounds are diimide compounds of naphthalene-1,4,5,8-tetracarboxylic acid, which are represented by the formula(1): 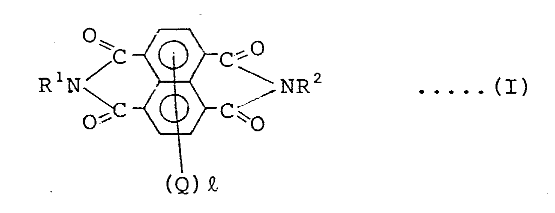
wherein R¹ and R², which may be the same or different, represent a hydrogen atom, a halogen atom, a hydroxyl group, an alkyl group, preferably of 1 to 10 carbon atoms, which may be substituted, an alkenyl group, preferably of 2 to 10 carbon atoms, which may be substituted, an aryl group, preferably of 6 to 10 carbon atoms, which may be substituted, an aralkyl group, preferably of 7 to 10 carbon atoms, which may be substituted or an alkylaralkyl group, preferably of 8 to 20 carbon atoms, which may be substituted; Q represents a halogen atom, a hydroxyl group, an amino group, a nitro group, a cyano group, a carboxyl group, a sulfonic acid group or a salt thereof, an alkyl group, preferably of 1 to 10 carbon atoms, which may be substituted, an alkoxy group, preferably of 1 to 10 carbon atoms, which may be substituted, an alkenyl group, preferably of 2 to 10 carbon atoms, which may be substituted, an aryl group, preferably of 6 to 10 carbon atoms, which may be substituted, an aralkyl group, preferably of 7 to 10 carbon atoms, which may be substituted or an alkylaralkyl group, preferably of 8 to 20 carbon atoms, which may be substituted and ℓ is 0 or an integer of from 1 to 4.

Among naphthalene-1,4,5,8-tetracarboxydiimides represented by the formula (I) those in which R¹ and R² each represent a C₁-C₄ alkyl group substituted by carboxyl group(s) or hydroxyl group(s) and ℓ is zero are preferred.

Concrete, examples of the compound of formula (I) are naphthalene-1,4,5,8-tetracarboxdiimide represented by the following formula: 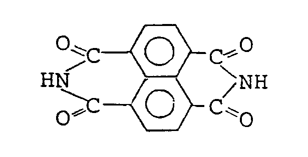
N,N'-bis(α-carboxymethyl)-naphthalene-1,4,5,8-tetracarboxydiimide represented by the following formula: 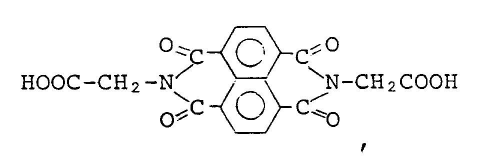
N,N'-bis(α-carboxymethyl)-2-chloronaphthalene-1,4,5,8-tetracarboxydiimide represented by the following formula: 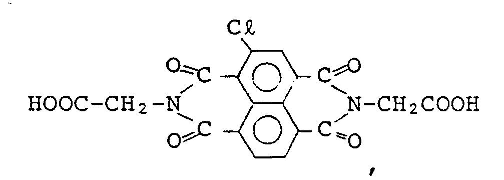
N,N'-bis(β-carboxyethyl)-naphthalene-1,4,5,8-tetracarboxydiimide represented by the following formula: 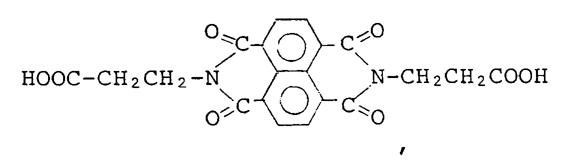
N,N'-bis(α-carboxy-γ-methylbutyl)-naphthalene-1,4,5,8-tetracarboxydiimide represented by the following formula: 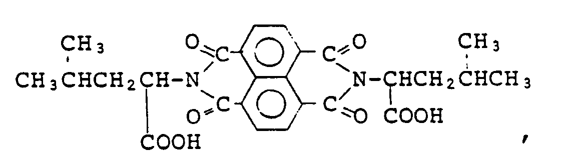
N,N'-bis(α-carboxy-γ-methylpentyl)-naphthalene-1,4,5,8-tetracarboxydiimide represented by the following formula: 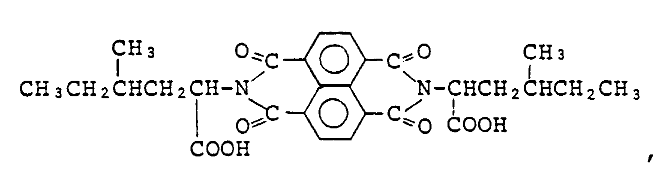
N,N'-bis(β-hydroxyethyl)-naphthalene-1,4,5,8-tetracarboxydiimide represented by the following formula: 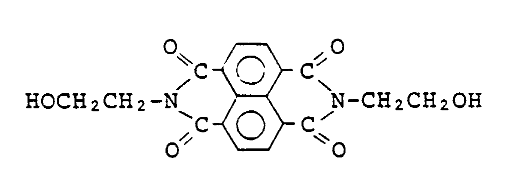
N,N'-bis(β-bromoethyl)-naphthalene-1,4,5,8-tetracarboxydiimide represented by the following formula: 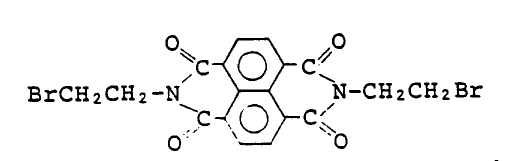
N,N'-bis(benzyl)-naphthalene-1,4,5,8-tetracarboxydiimide represented by the following formula: 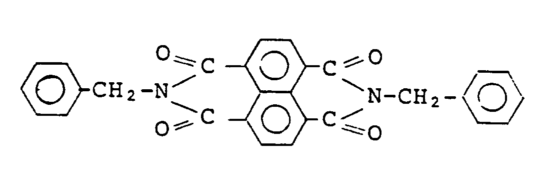
N,N'-bis carboxyphenyl)-naphthalene-1,4,5,8-tetracarboxydiimide represented by the following formula: 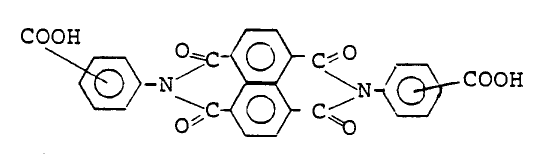
N,N'-bis(carboxytolyl)-naphthalene-1,4,5,8-tetracarboxydiimide represented by the following formula: 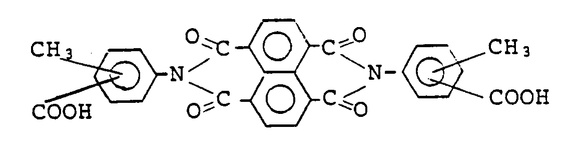
N,N'-bis(n-butyl)-naphthalene-1,4,5,8-tetracarboxydiimide represented by the following formula: 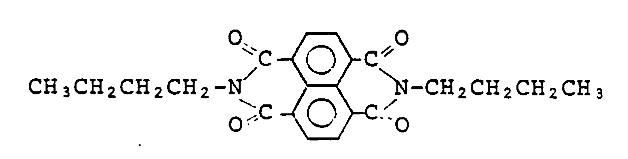
N,N'-bis(hydroxy)-naphthalene-1,4,5,8-tetracarboxydiimide represented by the following formula:

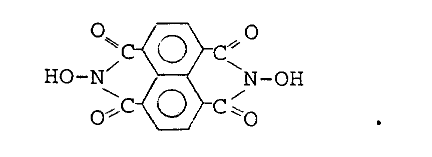

The naphthalenetetracarboxylic acid, acid anhydride thereof, imide thereof or ester thereof is generally used in an amount of from 0.001 to 20 parts by weight, preferably from 0.005 to 10 parts by weight, per 100 parts by weight of the thermoplastic polyester resin. When the amount is less than 0.001 parts by weight, efficient ultraviolet screening cannot be obtained even by addition of a suitable amount of a naphthalenedicarboxylic acid or a derivative thereof as described later.

In order to enhance the ultraviolet screening effect, the composition may, for example, further comprise not less than 0.001 parts by weight of at least one of naphthalenedicarboxylic acids and derivatives thereof per 100 parts by weight of the thermoplastic polyester resin. The naphthalenedicarboxylic acid or derivative thereof is preferably a compound represented by the formula (II) or the formula (III): 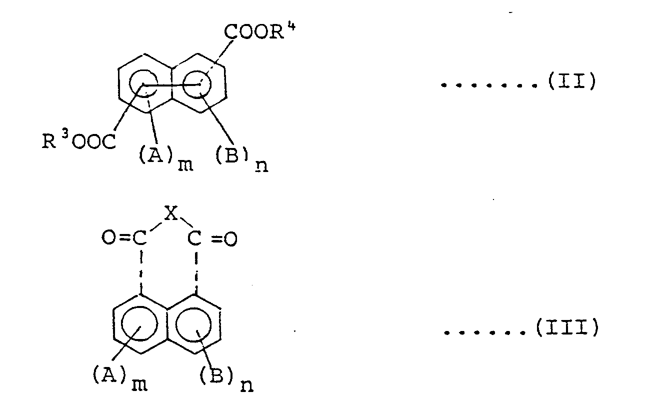
wherein X is an oxygen atom or a group NR⁵ wherein R⁵ is one of the atoms or groups listed for R¹ and R² above; R³ and R⁴, which may be the same or different, represent a hydrogen atom, a halogen atom, an alkyl group, preferably of 1 to 10 carbon atoms, which may be substituted, an alkenyl group, preferably of 2 to 10 carbon atoms, which may be substituted, an aryl group, preferably of 6 to 10 carbon atoms, which may be substituted, an aralkyl group, preferably of 7 to 10 carbon atoms, which may be substituted or an alkylaralkyl group, preferably of 8 to 20 carbon atoms, which may be substituted; A and B, which may be the same or different, represent a halogen atom, a hydroxyl group, an amino group, a nitro group, a cyano group, a sulfonic acid group or a metal salt thereof, a carboxyl group, an alkyl group, preferably of 1 to 10 carbon atoms, which may be substituted, an alkoxy group, preferably of 1 to 10 carbon atoms, which may be substituted, an alkenyl group, preferably of 2 to 10 carbon atoms, which may be substituted, an aryl group, preferably of 6 to 10 carbon atoms, which may be substituted, an aralkyl group, preferably of 7 to 10 carbon atoms, which may be substituted or an alkylaralkyl group, preferably of 8 to 20 carbon atoms, which may be substituted; each of m and n is 0 or an integer of from 1 to 3 and m + n is 0 or an integer of from 1 to 6; and the acid anhydride group or imide group of the formula -C(=O)- X - C(=O)- forms a ring at the 1,8-position, the 2,3-position or the 3,4-position of the naphthalene ring of the formula (III).

Preferred compounds of formula (II) or (III) are those wherein m and n are both zero; each of R³ and R⁴ of the formula (II) is independently a hydrogen atom or a C₁-C₄ alkyl group; and R⁵ of the formula (III) is a hydrogen atom, a hydroxyl group or an alkyl group, preferably of 1 to 4 carbon atoms, which may be substituted.

Examples of the naphthalenedicarboxylic acid derivatives are the structural isomers of dicarboxylic acid such as 2,6-naphthalenedicarboxylic acid, 2,7-naphthalenedicarboxylic acid, 1,8-naphthalenedicarboxylic acid, 1,5-naphthalenedicarboxylic acid or 2,3-naphthalenedicarboxylic acid; the acid anhydrides thereof; the esters thereof; the aromatic ring substituted compounds thereof wherein the substituents are halogen, NO₂, NH₂, CN, SO₃H and COOH; the metal salts thereof; and the imides produced by the reaction of one of these naphthalenedicarboxylic acids with ammonia, an amine, an aminocarboxylic acid or an aminoalcohol.

As the 2,3-substituted compounds, naphthalene-2,3-dicarboxylic acid and derivatives thereof such as the esters of naphthalene-2,3-dicarboxylic acid such as dimethyl ester, diethyl ester, dipropyl ester and dibutyl ester; naphthalene-2,3-dicarboxylic anhydride; naphthalene-2,3-dicarboxyimide; naphthalene-2,3-dicarboxy(α-carboxymethyl)imide; naphthalene-2,3-dicarboxy(β-carboxyethyl)imide; naphthalene-2,3-dicarboxy-(o-carboxyphenyl)imide; naphthalene-2,3-dicarboxy-(m-carboxyphenyl)imide; naphthalene-2,3-dicarboxy-(p-carboxyphenyl)imide, naphthalene-2,3-dicarboxy(α-bromomethyl)imide, naphthalene-2,3-dicarboxy(α-hydroxymethyl)imide; the 1,4-, 1,5-, 1,8-, 2,6- and 2,7-structural isomers thereof; and the aromatic ring substituted compounds of the above-mentioned compounds wherein the substituents are 1 to 6 hydroxyl, chloro, bromo, methoxy, ethoxy, cyano, amino, nitro, sulfonyl or carboxyl groups may be exemplified. For developing a combined effect, it is important that the compound used in combination with the naphthalenetetracarboxylic acid or the derivative thereof has a naphthalenedicarboxylic acid moiety.

Particularly preferred naphthalenedicarboxylic acid compounds are naphthalene-2,6-dicarboxylic acid, naphthalene-2,7-dicarboxylic acid, naphthalene-2,3-dicarboxylic acid, naphthalene-1,4-dicarboxylic acid or an ester of these dicarboxylic acids, especially an alkyl ester, more especially a C₁-C₄ alkyl ester.

When less than 0.001 parts by weight of the naphthalenedicarboxylic acid or derivative thereof is used further improvement of the ultraviolet screening is not seen. The preferred amount of the naphthalenedicarboxylic acid or derivative thereof is from 0.01 to 10 parts by weight.

The compound having a naphthalenetetracarboxylic acid framework and the compound having a naphthalenedicarboxylic acid framework may be added in any step of the production of the polyester. The above-mentioned compounds added in any step before mold-processing can provide ultraviolet screening to the same extent as mentioned above.

Thus the compound having the naphthalenetetracarboxylic acid framework and the compound having the naphthalenedicarboxylic acid framework may be added in any step until the molding of the polyester is finished, for instance, before the polycondensation, during the polycondensation, after the polycondensation, in the powdery or granular state of the polyester or during the molding step of the polyester.

The thermoplastic polyester is generally obtained from at least one dicarboxylic acid component represented by an aromatic dicarboxylic acid such as terephthalic acid, isophthalic acid, phthalic acid, naphthalenedicarboxylic acid, diphenyl ether dicarboxylic acid or diphenylsulfonedicarboxylic acid, or an ester thereof; an cycloaliphatic dicarboxylic acid which is an aromatic ring hydrogenated compound of the above-mentioned aromatic dicarboxylic acid, such as hexahydroterephthalic acid, or an ester thereof; an aliphatic dicarboxylic acid such as succinic acid, adipic acid or sebacic acid, azelaic acid, or an ester thereof; and an unsaturated dicarboxylic acid such as fumalic acid and 4-carboxycinnamic acid, or an ester thereof, and glycol mainly composed of ethylene glycol. Polyethylene terephthalate is preferred. These polyesters may be prepared by copolymerizing, as the acid component, the above-mentioned dicarboxylic acids as a third component in addition to terephthalic acid, in an amount of not more than 20 mol%.

Furthermore, the polyester may, for example, be prepared by copolymerizing, as the glycol component and a third component in addition to ethylene glycol, an aliphatic glycol such as diethylene glycol, trimethylene glycol, tetramethylene glycol and neopentyl glycol; a cycloaliphatic glycol such as cyclohexane dimethanol; a bisphenol derivative such as 2,2-bis(4'-β-hydroxyethoxyphenyl)propane and bis-(4'-β-hydroxyethoxyphenyl)sulfone and a glycol represented by the formula: 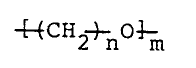
(wherein n is an integer of 1 to 6 and m is an integer of not less than 4), for example polyethyleneglycol or polytetramethylene glycol, in an amount of not more than 20 mol%. The polyester may also be formed by copolymerizing an oxyacid component such as hydroxybenzoic acid. Besides, so far as the polyester is substantially linear, it may be produced by copolymerizing a polyfunctional compound which is not less than trifunctional, such as pentaerythritol, trimethylolpropane, trimellitic acid, trimesic acid or pyrromellitic acid, and a monofunctional compound such as o-benzoylbenzoic acid. Also, in addition to the above-mentioned polyester, the material produced by blending another thermoplastic resin such as polybutylene terephthalate, polyethylene naphthalate, polyester elastomer or polycarbonate may be used as the polyester in the present invention.

It is preferred that the limiting viscosity of the polyester used in the present invention is not less than 0.5, preferably not less than 0.6. The viscosity of the polyester is, for instance, in the case of producing a molded hollow article, particularly important depending on the molding method. Particularly, when obtaining a substantially nonoriented and molded hollow article by a blowing molding method, it is necessary to maintain the fluidity of the molten polyester at a level higher than a predetermined one to prevent draw-down, although the level depends on the capacity of the blow moldings. In this case, a polyester having a limiting viscosity of not less than 0.7, preferably not less than 0.8 is preferably used. Besides, in a draw and blow molding method, in an extruding method wherein the film is obtained by stretching uniaxially or biaxially after forming a sheet, and in an injection molding method by which variously shaped and molded articles are obtained, a polymer of a relatively low viscosity as compared to the case of blow molding can be used. In these cases, a polyester having a limiting viscosity of not less than 0.5, preferably not less than 0.6 is generally used. However, according to the physical properties required for the molded article, a polyester having a higher viscosity may be used.

Known additives may be added to the polyester composition, for instance a stabilizer, mold release agent, antistatic agent, dispersing agent, dyestuff or pigment, in any step of the production of the polyester. Such an additive may be added by utilizing master batch concentrates before mold-processing.

Preferred dyestuffs and pigments are titanium oxide, carbon black, phthalocyanine blue, phthalocyanine green, ultramarine, cobalt blue, titanium yellow, red iron oxide, burnt-umber and yellow oxide, and heat-resistant and oil-soluble dyestuffs, such as those having a perinone quinophthalone anthrapyridone or anthraquinone moiety. Dyestuffs and pigments having a structure which reacts with a functional group of the polyester and binds to the polyester chain are preferred. Further preferred dyestuffs and pigments are those which are highly compatible with the polyester and which have sufficient heat-stability and colour-tone stability even at the temperatures used in the production and processing of the polyester. When the polyester composition is used for producing a foodstuff-packaging container, dyestuffs and pigments which do not have safety and sanitation problems are used.

The polyester resin composition may be processed into molded articles as it is or, as occasion demands, the polyester resin composition may be subjected to solid phase polymerization in a high vacuum or under an inert gas to provide a higher polymerization degree, using a lower aldehyde or a lower oligomer. The thus treated composition may be molded. The composition may also be subjected to a post-treatment such as solvent-extraction by xylene and chloroform, and the thus treated composition may then be used for molding.

The polyester resin composition may be converted into a so-called master batch which is coloured to a desired colour in a high concentration, of from a few times to 100 times, practically to 50 times, relative to the desired concentration and then the thus prepared master batch is diluted with a non-coloured polyester or another-coloured polyester, or is used to develop another new colour tone. Thus a polyester resin composition developing finally the desired colour may be used.

The thermoplastic polyester resin composition is formed into molded articles by melt-molding. All the melt-molding methods generally used for polyesters are applicable to the thermoplastic polyester resin composition. It is possible to obtain a molded hollow article which has excellent ultraviolet screening properties, gas-barrier properties, toughness and chemical-resistance, and has glass-like transparency with a high class vision, for example by a blowing method such as an ordinary blow molding method, an injection blow molding method and a cold-parison method in which the preliminarily molded material is biaxially stretched after reheating. The thus produced hollow article is particularly suitable as a container for seasonings such as soyabean sauce, sauces, sweet sake or dressings, edible oils, carbonated-beverages, fruit juices, sake, wine, cosmetics and medicines. The polyester resin composition may also be processed into a uniaxially or biaxially stretched film after having being processed into a sheet by extrusion molding or may be processed into a laminated film together with another resin.

The thus prepared film is favorably used in particular as a packaging material for general foods, medicines or cosmetics, or may be used for sticking to a window or as a mulching material in agriculture and horticulture.

The polyester resin composition is also favorably used to produce molded articles by injection-molding.

The present invention is now further illustrated in the following Examples and Comparative Examples.

The parts given in the Examples and Comparative Examples are parts by weight.

The measuring methods used in Examples and Comparative Examples are as follows:

### Limiting Viscosity

The limiting viscosity of the resin was measured in a mixture of phenol and tetrachloroethane (50:50 by weight) at 30°C and at a concentration of 1.0 g/dl.

### Transmission rate of UV light

The transmission rate of UV light of the film was measured by an ordinary method using a spectral photometer (made by HITACHI Ltd., model No. 340).

### Amount of acetaldehyde

The amount of acetaldehyde contained in the resin was measured by a high-sensitivity gas chromatograph after extracting the resin by water for 2 hours at 160°C.

### Flow rate of an inert gas

The flow rate of an inert gas was shown by the amount of the gas transmitted through the film per unit time (hour) and per unit weight (kg) of the resin after converting into the volume (litre) at 25°C under a pressure of 101 kPa (1 atmosphere).

### EXAMPLE 1:

To 20,000 parts of bis(β-hydroxyethyl) terephthalate contained in a polymerization vessel, 2 parts of germanium dioxide, 2 parts of ortho-phosphoric acid and 25 parts of naphthalene-1,4,5,8-tetracarboxylic dianhydride were added. The materials in the polymerization vessel were heated gradually from 260°C with gradual simultaneous reduction of the inner pressure of the polymerization vessel from ordinary pressure. The polymerization was carried out at 280°C under a vacuum of 133 Pa (1 torr) for a total of 3 hours to obtain a transparent polyester composition having a limiting viscosity of 0.68.

After vacuum drying the thus obtained polyester composition, the composition was molded into a 350 µm thick sheet by an extruder, wherein the temperatures of cylinder and the nozzle were 275°C, the screw rotation was 40 rpm and the amount of extrusion was 80 g/min.

The thus produced film had light transmissivities at 370 nm and 380 nm of 2.8 % and 15.0 %. The transmissivity of the sheet is shown in Fig. 1.

The dried resin composition was also subjected continuously to injection-molding by an injection-molding machine (made by TOSHIBA corporation, IS-60B), wherein the temperatures of the cylinder and the nozzle were 275°C, the screw rotation was 100 rpm, the injection time was 10 s and the temperature of cooling water for the metal mold was 10°C, for injecting plates of 100 mm length and width and 2 mm thickness.

Even after injecting 500 plates, adhered materials such as white powder were not observed on the injected plates.

### EXAMPLE 2:

The same reaction as in Example 1 was carried out except for adding 20 parts of N,N'-bis(α-carboxymethyl)naphthalene-1,4,5,8-tetracarboxydiimide and 100 parts of naphthalene-2,6-dicarboxylic acid instead of the naphthalene-1,4,5,8-tetracarboxylic dianhydride in Example 1, to obtain a transparent polyester composition having a limiting viscosity of 0.66.

The light transmissivity of a 350 µm thick sheet obtained by molding the thus produced polyester composition was 0.0 % at 370 nm and 0.1 % at 380 nm. The transmissivity of the sheet is shown in Fig. 2.

### EXAMPLE 3:

The same reaction as in Example 2 was repeated except for further adding 1.4 part of copper phthalocyanine and 2 parts of a quinophthalone reactive dyestuff (made by MITSUBISHI Chemical Industries Ltd.). A green coloured transparent polyester composition having a limiting viscosity of 0.60 was obtained. The light transmissivity of a 350 µm thick sheet obtained by molding the composition in the same manner as in Example 1 was 0.1 % at 370 nm. The transmissivity of the film is shown in Fig. 1.

After crystallizing the surfaces of chips of the thus produced polyester composition in a stirring crystallizer of the SOLID AIRE®-type (made by Bepex Corp., USA) at a resin temperature of 165°C, the chips were transferred to a stationary-bed solid-phase polymerization column. After drying the chips for 3 hours at from 120 to 160°C under a flow of nitrogen gas at a flow rate of 30 litres/kg·hour, the chips were subjected to solid phase polymerization for 10 hours at a resin temperature of 210°C.

The limiting viscosity of the thus polymerized material in the solid phase was 0.76, and the chips contained 3.1 ppm of acetaldehyde.

From the above-mentioned polyester composition, preforms were molded by an injection-molding machine (made by TOSHIBA Corporation, IS-60) wherein the temperature of the cylinder and the nozzle were 275°C, the screw rotation was 100 rpm, the injection time was 10 s and the temperature of cooling water for the metal mold was 10°C. A litre capacity bottle was obtained by blow-molding the preform in a blow-molding machine (made by Corpoplast Corp., BMB-3), wherein the temperature of preheating furnace was 90°C, the blow pressure was 20 kg/cm² and the molding cycle was 10 s.

The UV light transmissivity of a 350 µm thick part of the bottle was 0.1 % at 370 nm and 380 nm.

### COMPARATIVE EXAMPLE 1:

Under the same conditions as in Example 1 but only adding 20 parts of germanium dioxide and 20 parts of ortho-phosphoric acid, a polyester composition having a limiting viscosity of 0.68 was obtained. The UV light transmissivity of a 350 µm thick sheet of the composition, which was produced in the same manner as in Example 1, was 68 % at 370 nm and was 69% at 380 nm.

The transmissivity of the sheet is shown in Fig. 1.

### EXAMPLE 4:

After adding 0.15 parts of N,N'-bis(α-carboxymethyl)naphthalene-1,4,5,8-tetracarboxydiimide to 100 parts of polyethylene telephthalate (PET) obtained in the same procedure as in Comparative Example 1, the thus obtained mixture was well blended in a V-type blender. After vacuum-drying the thus obtained composition, a transparent 350 µm thick sheet was molded from the dried composition in the same manner as in Example 1.

The UV light transmissivity of the sheet was 0.0 % at 370 nm and 0.1 % at 380 nm.

### EXAMPLE 5:

In the same manner as in Example 1 except for adding 30 parts of naphthalene-1,3,5,7-tetracarboxylic acid instead of 25 parts of naphthalene-1,4,5,8-tetracarboxylic dianhydride, a transparent polyester composition having a limiting viscosity of 0.67 was obtained. The UV light transmissivity of a 350 µm thick film of the composition was 2.6 % at 370 nm and 15.2 % at 380 nm. Using the above-mentioned polyester composition, plates of 100 mm length and width and 2 mm thickness were injected. However, even after injecting 500 plates, adhered materials such as white powder were not observed on the injected plates.

### COMPARATIVE EXAMPLE 2:

Into 5 kg of polyethylene terephthalate having a limiting viscosity of 0.78 (made by NIPPON UNIPET Co., Ltd., RT-543 C® RESIN), 5.5 g of 2(2'-hydroxy-3'-t-butyl-5'-methylphenyl)benzotriazole(made by CIBA GEIGY Ltd. TINUVIN 326®), which is a representative commerciallized ultraviolet absorbing agent, were blended. The thus obtained composition was processed in the same manner as in Example 1 to form a 350 µm thick sheet. The UV light transmissivity of the sheet was 2.8 % at 370 nm and 8.0 % at 380 nm. The transmissivity of the sheet is shown in Fig. 2.

When the above-mentioned composition was continuously injected into plates of 100 mm length and width and 2 mm thickness in the same manner as in Example 1, a yellow material adhered onto the pointed end of the nozzle of the molding machine, and after 200 plates were injected a yellow adhering material was noticed.

### COMPARATIVE EXAMPLE 3:

Into 5 kg of the same polyethylene terephthalate resin as in Comparative Example 2, 110 g of 2(2'-hydroxy-5'-methylphenyl)-benzotriazole(made by CIBA GEIGY Ltd. TINUVIN P®), which is a representative commerciallized ultraviolet absorbing agent, were dry-blended, and a master batch resin was produced from the thus blended materials under the conditions of Example 1.

Into 1 part of the master batch resin, 19 parts of the same polyethylene terephthalate resin as above were dry-blended. A 350 µm thick sheet was molded from the blended material in the same manner as in Example 1.

The UV light transmissivity of the sheet was 2.2 % at 370 nm and 15.8 % at 380 nm. The transmissivity of the sheet is shown in Fig. 2.

When the above-mentioned composition was continuously injected into plates of 100 mm length and width and 2 mm thickness in the same manner as in Example 1, a yellow material adhered onto the pointed end of the nozzle of the molding machine, and after 200 plates were injected a yellow adhering material was noticed.

### EXAMPLES 6 and 7 and COMPARATIVE EXAMPLE 4:

Production of resin compositions and sheets was carried out in the same manner as in Examples 1 and 4 and Comparative Example 3 except for using naphthalene-1,4,5,8-tetracarboxylic dianhydride, N,N'-bis(α-carboxymethyl)-naphthalene-1,4,5,8-tetracarboxydiimide and TINUVIN P®, which had been respectively used in Examples 1 and 4 and Comparative Example, in increased amounts as shown in Table 1. The results are shown in Table 1.

For reference, Table 1 shows the results of Examples 1 to 7 and Comparative Examples 1 to 4 collectively.

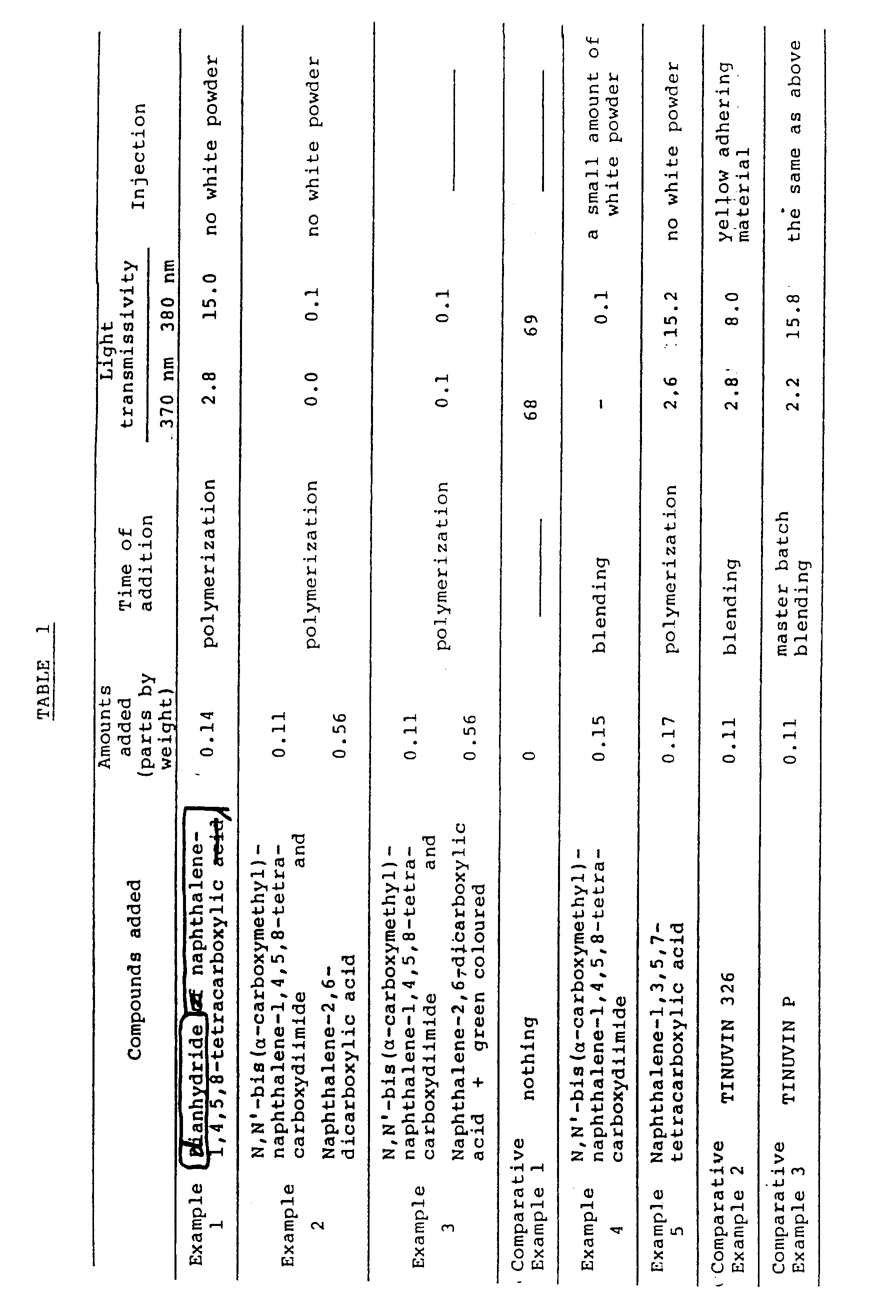

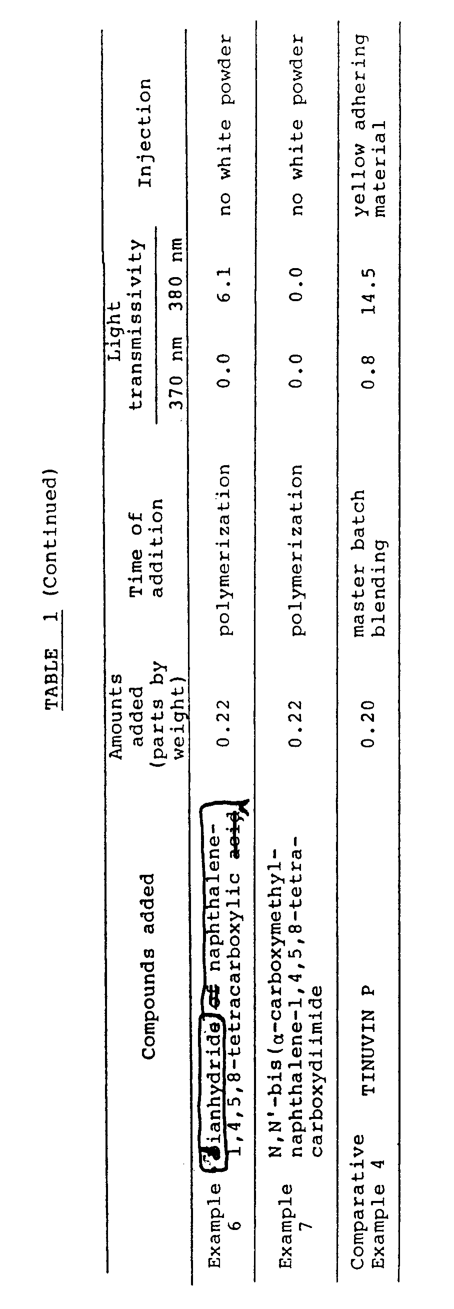

## Claims

1. Use of at least one naphthalenetetracarboxylic acid, acid anhydride thereof, imide thereof or ester thereof as an ultraviolet screening agent in a thermoplastic polyester resin composition.

2. Use according to claim 1, wherein said naphthalenetetracarboxylic acid is naphthalene-1,4,5,8-tetracarboxylic acid, naphthalene-1,3,5,7-tetracarboxylic acid, naphthalene-1,3,6,8-tetracarboxylic acid, naphthalene-1,2,4,5-tetracarboxylic acid, naphthalene-2,3,6,7-tetracarboxylic acid, naphthalene-1,2,5,6-tetracarboxylic acid or naphthalene-1,4,6,7-tetracarboxylic acid.

3. Use according to claim 1, wherein said imide of naphthalenetetracarboxylic acid is naphthalene-1,4,5,8-tetracarboxydiimide represented by the formula (I): 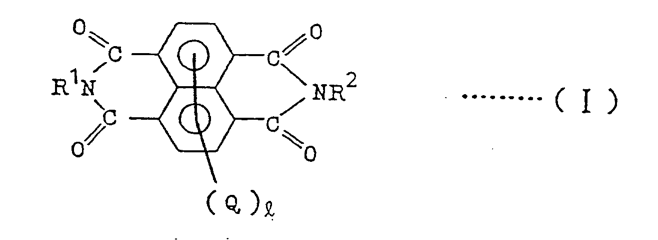 wherein R¹ and R², which may be the same or different, represent a hydrogen atom, a halogen atom, a hydroxyl group, an alkyl group which may be substituted, an alkenyl group which may be substituted, an aryl group which may be substituted, an aralkyl group which may be substituted or an alkylaralkyl group which may be substituted; Q represents a halogen atom, a hydroxyl group, an amino group, a nitro group, a cyano group, a carboxyl groups a sulfonic acid group or a salt thereof, an alkyl group which may be substituted, an alkoxy group which may be substituted, an alkenyl group which may be substituted, an aryl group which may be substituted, an aralkyl group which may be substituted or an alkylaralkyl group which may be substituted and ℓ is 0 or an integer of from 1 to 4.

4. Use according to claim 3, wherein said naphthalene-1,4,5,8-tetracarboxydiimide represented by the formula (I) is a compound in which R¹ and R² each represent a C₁-C₄ alkyl group substituted by carboxyl group(s) or hydroxyl group(s) and ℓ is 0.

5. Use according to claim 4, wherein said naphthalene-1,4,5,8-tetracarboxydiimide is N,N'-bis(α-carboxymethyl)-naphthalene-1,4,5,8-tetracarboxydiimide, N,N'-bis(β-carboxyethyl)-naphthalene-1,4,5,8-tetracarboxydiimide or N,N'-bis(β-hydroxyethyl)-naphthalene-1,4,5,8-tetracarboxydiimide.

6. Use according to any one of the preceding claims, wherein the naphthalenetetracarboxylic acid, acid anhydride thereof, imide thereof or ester thereof is used in an amount of from 0.001 to 20 parts by weight per 100 parts by weight of said thermoplastic polyester resin.

7. Use according to claim 6, wherein the naphthalenetetracarboxylic acid, acid anhydride thereof, imide thereof or ester thereof is used in an amount of from 0.005 to 10 parts by weight per 100 parts by weight of said thermoplastic polyester resin.

8. Use according to any one of the preceding claims, wherein said thermoplastic polyester resin is polyethylene terephthalate.

9. Use according to any one of the preceding claims, wherein the composition is formed by adding the or each naphthalenetetracarboxylic acid, acid anhydride thereof, imide thereof or ester thereof at the time of the polymerization of said thermoplastic polyester resin.

10. Use according to any one of claims 1 to 8, wherein the composition is formed by adding the or each naphthalenetetracarboxylic acid, acid anhydride thereof, imide thereof or ester thereof to said thermoplastic polyester resin after polymerization of the said resin.

11. Use according to any one of the preceding claims, wherein the composition further comprises not less than 0.001 parts by weight of at least one of naphthalene dicarboxylic acid or derivative thereof per 100 parts by weight of said thermoplastic polyester resin.

12. Use according to claim 11, wherein said naphthalenedicarboxylic acid or derivative thereof is a compound represented by the formula (II) or the formula (III): 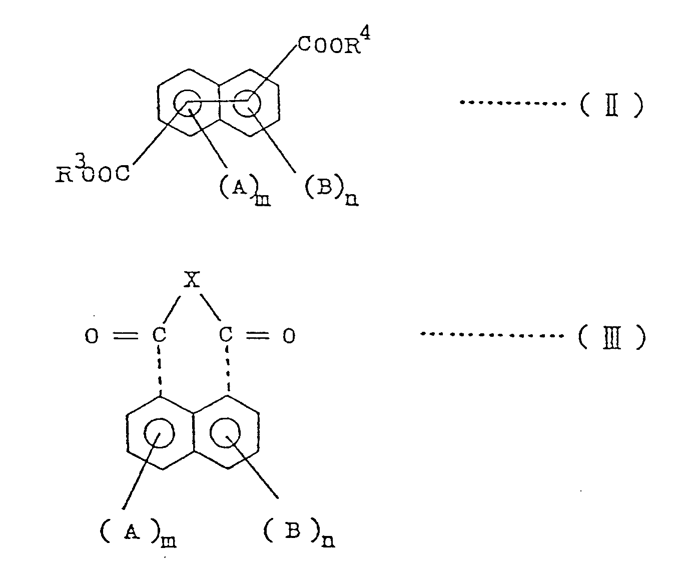 wherein X represents an oxygen atom or a group NR⁵ wherein R⁵ is one of the atoms or groups listed for R¹ and R² in claim 3; R³ and R⁴, which may be the same or different, represent a hydrogen atom, a halogen atom, an alkyl group which may be substituted, an alkenyl group which may be substituted, an aryl group which may be substituted, an aralkyl group which may be substituted or an alkylaralkyl group which may be substituted; A and B, which may be the same or different, represent a halogen atom, a hydroxyl group, an amino group, a nitro group, a cyano group, a sulfonic acid group or a metal salt thereof, a carboxyl group, an alkyl group which may be substituted, an alkoxy group which may be substituted, an alkenyl group which may be substituted, an aryl group which may be substituted, an aralkyl group which may be substituted or an alkylaralkyl group which may be substituted; each of m and n is 0 or an integer of from 1 to 3 and m + n is 0 or an integer of from 1 to 6; and the acid anhydride group or imide group of the formula:
- C (= O) - X - C (= O) -
forms a ring at the 1,8-position, the 2,3-position or the 3,4-position of the naphthalene ring of the formula (III).

13. Use according to claim 12, wherein said naphthalenedicarboxylic acid or the derivative thereof represented by the formula (II) or (III) is a compound in which m and n are both zero; each of R³ and R⁴ of the formula (II) is independently a hydrogen atom or a C₁-C₄ alkyl group; and R⁵ of the formula (III) is a hydrogen atom, a hydroxyl group or an alkyl group which may be substituted.

14. Use according to claim 13, wherein said naphthalenedicarboxylic acid or derivative thereof is naphthalene-2,6-dicarboxylic acid, naphthalene-2,7-dicarboxylic acid, naphthalene-2,3-dicarboxylic acid, naphthalene-1,4-dicarboxylic acid or an alkyl ester of one of these four acids.

15. Use according to any one of claims 11 to 14, wherein the composition comprises from 0.01 to 10 parts by weight of the naphthalenedicarboxylic acid or derivative thereof per 100 parts by weight of said thermoplastic polyester resin.

16. Use according to any one of the preceding claims, wherein the composition is in the form of a film or sheet.

17. A thermoplastic polyester resin composition wherein:
(a) the thermoplastic polyester resin consists essentially of (i) a dicarboxylic acid component consisting of units derived from terephthalic acid and, optionally, not more than 20mol% units derived from other aromatic dicarboxylic acids, esters of aromatic dicarboxylic acids, cycloaliphatic dicarboxylic acids or esters thereof, aliphatic dicarboxylic acids or esters thereof or unsaturated dicarboxylic acids or esters thereof, and (ii) a glycol component consisting of units derived from ethylene glycol and, optionally, not more than 20mol% units derived from other aliphatic glycols, cycloaliphatic glycols, bisphenol derivatives or glycols represented by the formula 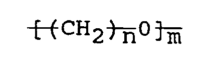 wherein n is an integer of 1 to 6 and m is an integer of not less than 4; and
(b) an imide of a naphthalenetetracarboxylic acid is present in an amount effective to act as an ultraviolet screening agent, the naphthalene ring of the said imide being unsubstituted or substituted by up to 4 substituents chosen from a halogen atom, a hydroxyl group, a nitro group, a cyano group, a carboxyl group, a sulfonic acid group or a salt thereof, an alkyl group which may be substituted, an alkoxy group which may be substituted, an alkenyl group which may be substituted, an aryl group which may be substituted, an aralkyl group which may be substituted and an alkylaralkyl group which may be substituted.

18. A composition according to claim 7, wherein said imide of naphthalenetetracarboxylic acid is naphthalene-1,4,5,8-tetracarboxydiimide represented by the formula (I): 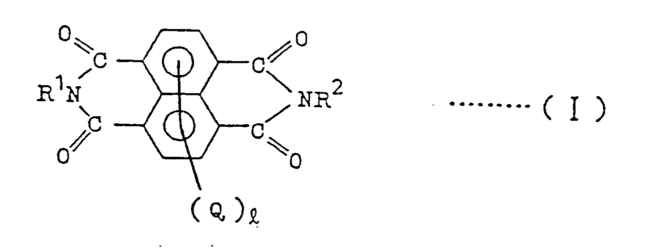 wherein R¹ and R², which may be the same or different, represent a hydrogen atom, a halogen atom, a hydroxyl group, an alkyl group which may be substituted, an alkenyl group which may be substituted, an aryl group which may be substituted, an aralkyl group which may be substituted or an alkylaralkyl group which may be substituted; Q represents a halogen atom, a hydroxyl group, a nitro group, a cyano group, a carboxyl group, a sulfonic acid group or a salt thereof, an alkyl group which may be substituted, an alkoxy group which may be substituted, an alkenyl group which may be substituted, an aryl group which may be substituted, an aralkyl group which may be substituted or an alkylaralkyl group which may be substituted and ℓ is 0 or an integer of from 1 to 4.

19. A composition according to claim 18, wherein said naphthalene-1,4,5,8-tetracarboxydiimide represented by the formula (I) is a compound in which R¹ and R² each represent a C₁-C₄ alkyl group substituted by carboxyl group(s) or hydroxyl group(s) and ℓ is 0.

20. A composition according to claim 19, wherein said naphthalene-1,4,5,8-tetracarboxydiimide is N,N'-bis(α-carboxymethyl)-naphthalene-1,4,5,8-tetracarboxydiimide, N,N'-bis(β-carboxyethyl)-naphthalene-1,4,5,8-tetracarboxydiimide or N,N'-bis(β-hydroxyethyl)-naphthalene-1,4,5,8-tetracarboxydiimide.

21. A composition according to any one of claims 17 to 20, wherein the said imide is used in an amount of from 0.001 to 20 parts by weight per 100 parts by weight of the said thermoplastic polyester resin.

22. A composition according to claim 21, wherein the said imide is used in an amount of from 0.005 to 10 parts by weight per 100 parts by weight of said thermoplastic polyester resin.

23. A composition according to any one of claims 17 to 22, wherein said thermoplastic polyester resin is polyethylene terephthalate.

24. A composition according to any one of claims 17 to 23, which is formed by adding the said imide at the time of the polymerization of the said thermoplastic polyester resin.

25. A composition according to any one of claims 17 to 23, wherein the composition is formed by adding the said imide to said thermoplastic polyester resin after polymerization of the said resin.

26. A composition according to any one of claims 17 to 25, which also contains not less than 0.001 parts by weight of at least one of naphthalene dicarboxylic acid or derivative thereof per 100 parts by weight of said thermoplastic polyester resin.

27. A composition according to claim 26, wherein the said naphthalenedicarboxylic acid or derivative thereof is a compound represented by the formula (II) or the formula (III): 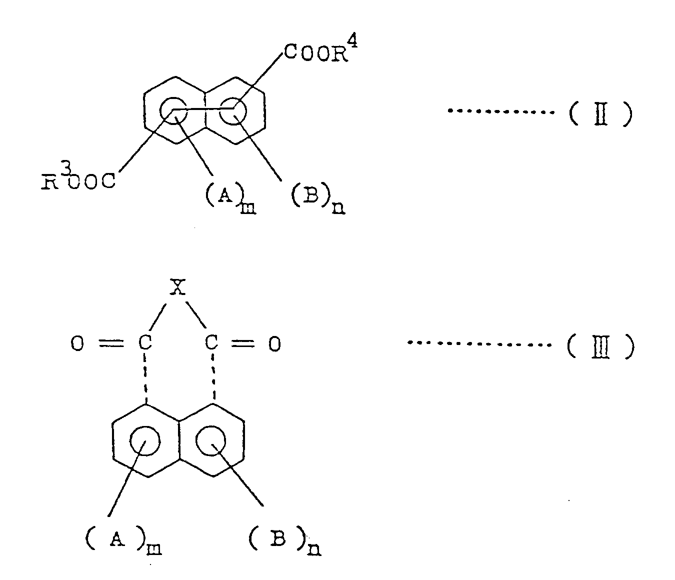 wherein X represents an oxygen atom or a group NR⁵ wherein R⁵ is one of the atoms or groups listed for R¹ and R² in claim 3; R³ and R⁴, which may be the same or different, represent a hydrogen atom, a halogen atom, an alkyl group which may be substituted, an alkenyl group which may be substituted, an aryl group which may be substituted, an aralkyl group which may be substituted or an alkylaralkyl group which may be substituted; A and B, which may be the same or different, represent a halogen atom, a hydroxyl group, an amino group, a nitro group, a cyano group, a sulfonic acid group or a metal salt thereof, a carboxyl group, an alkyl group which may be substituted, an alkoxy group which may be substituted, an alkenyl group which may be substituted, an aryl group which may be substituted, an aralkyl group which may be substituted or an alkylaralkyl group which may be substituted; each of m and n is 0 or an integer of from 1 to 3 and m + n is 0 or an integer of from 1 to 6; and the acid anhydride group or imide group of the formula:
- C (= O) - X - C (= O) -
forms a ring at the 1,8-position, the 2,3-position or the 3,4-position of the naphthalene ring of the formula (III).

28. A composition according to claim 27, wherein said naphthalenedicarboxylic acid or the derivative thereof represented by the formula (II) or (III) is a compound in which m and n are both zero; each of R³ and R⁴ of the formula (II) is independently a hydrogen atom or a C₁-C₄ alkyl group; and R⁵ of the formula (III) is a hydrogen atom, a hydroxyl group or an alkyl group which may be substituted.

29. A composition according to claim 28, wherein said naphthalenedicarboxylic acid or derivative thereof is naphthalene-2,6-dicarboxylic acid, naphthalene-2,7-dicarboxylic acid, naphthalene-2,3-dicarboxylic acid, naphthalene-1,4-dicarboxylic acid or an alkyl ester of one of these four acids.

30. A composition according to any one of claims 26 to 29, which contains from 0.01 to 10 parts by weight of the naphthalenedicarboxylic acid or derivative thereof per 100 parts by weight of said thermoplastic polyester resin.

31. A composition according to any one of claims 17 to 30 which is in the form of a film or sheet.

32. A process for preparing a container, which process comprises forming the container from a thermoplastic polyester resin composition comprising at least one naphthalenetetracarboxylic acid, acid anhydride thereof, imide thereof or ester thereof as defined in any one of claims 1 to 16.

33. A process according to claim 32, wherein the container is a bottle.

## Patentansprüche

1. Verwendung von mindestens einer Naphthalintetracarbonsäure, eines Säureanhydrids derselben, eines Imids derselben oder eines Esters derselben als UV-Absorber in einer Zusammensetzung von thermoplastischem Polyesterharz.

2. Verwendung nach Anspruch 1, wobei die Naphthalintetracarbonsäure Naphthalin-1,4,5,8-tetracarbonsäure, Naphthalin-1,3,5,7-tetracarbonsäure, Naphthalin-1,3,6,8-tetracarbonsäure, Naphthalin-1,2,4,5-tetracarbonsäure, Naphthalin-2,3,6,7-tetracarbonsäure, Naphthalin-1,2,5,6-tetracarbonsäure oder Napthalin-1,4,6,7-tetracarbonsäure ist.

3. Verwendung nach Anspruch 1, wobei das Imid von Naphthalintetracarbonsäure Naphthalin-1,4,5,8-tetracarboxydiimid ist, das durch die Formel (I) dargestellt wird: 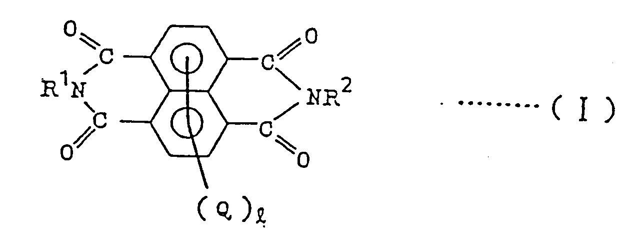 worin R¹ und R², welche gleich oder verschieden sein können, ein Wasserstoffatom, ein Halogenatom, eine Hydroxylgruppe, eine Alkylgruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellen; Q ein Halogenatom, eine Hydroxylgruppe, eine Aminogruppe, eine Nitrogruppe, eine Cyanogruppe, eine Carboxylgruppe, eine Sulfonsäuregruppe oder ein Salz derselben, eine Alkylgruppe, welche substituiert sein kann, eine Alkoxygruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellt und ℓ gleich 0 oder eine ganze Zahl von 1 bis 4 ist.

4. Verwendung nach Anspruch 3, wobei das durch die Formel (I) dargestellte Naphthalin-1,4,5,8-tetracarboxydiimid eine Verbindung ist, in welcher R¹ und R² jeweils eine C₁-C₄-Alkylgruppe, die durch (eine) Carboxylgruppe(n) oder (eine) Hydroxylgruppe(n) substituiert ist darstellen, und ℓ gleich 0 ist.

5. Verwendung nach Anspruch 4, wobei das Naphthalin-1,4,5,8-tetracarboxydiimid N,N'-Bis(α-Carboxymethyl)-naphthalin-1,4,5,8-tetracarboxydiimid, N,N'-Bis(β-Carboxyethyl)-naphthalin-1,4,5,8-tetracarboxydiimid oder N,N'-Bis(β-Hydroxyethyl)-naphthalin-1,4,5,8-tetracarboxydiimid ist.

6. Verwendung nach einem der vorangehenden Ansprüche, wobei die Naphthalintetracarbonsäure, das Säureanhydrid derselben, das Imid derselben oder der Ester derselben in einer Menge zwischen 0,001 und 20 Gewichtsteilen pro 100 Gewichtsteile thermoplastisches Polyesterharz verwendet wird.

7. Verwendung nach Anspruch 6, wobei die Naphthalintetracarbonsäure, das Säureanhydrid derselben, das Imid derselben oder der Ester derselben in einer Menge zwischen 0,005 und 10 Gewichtsteilen pro 100 Gewichtsteile thermoplastisches Polyesterharz verwendet wird.

8. Verwendung nach einem der vorangehenden Ansprüche, wobei das thermoplastische Polyesterharz Polyethylenterephthalat ist.

9. Verwendung nach einem der vorangehenden Ansprüche, wobei die Zusammensetzung durch Zugabe der Naphthalintetracarbonsäure, des Säureanhydrids derselben, des Imids derselben oder des Esters derselben oder jeder dieser Verbindungen während der Polymerisation des thermoplastischen Polyesterharzes gebildet wird.

10. Verwendung nach einem der Ansprüche 1 bis 8, wobei die Zusammensetzung durch Zugabe der Naphthalincarbonsäure, des Säureanhydrids derselben, des Imids derselben oder des Esters derselben oder jeder dieser Verbindungen zu dem thermoplastischen Polyesterharz nach der Polymerisation des Harzes gebildet wird.

11. Verwendung nach einem der vorangehenden Ansprüche, wobei die Zusammensetzung außerdem nicht weniger als 0,001 Gewichtsteile mindestens einer der Verbindungen Naphthalindicarbonsäure oder Derivate derselben pro 100 Gewichtsteile thermoplastisches Polyesterharz enthält.

12. Verwendung nach Anspruch 11, wobei die Naphthalindicarbonsäure oder ein Derivat derselben eine Verbindung ist, die durch die Formel (II) oder die Formel (III) dargestellt wird: 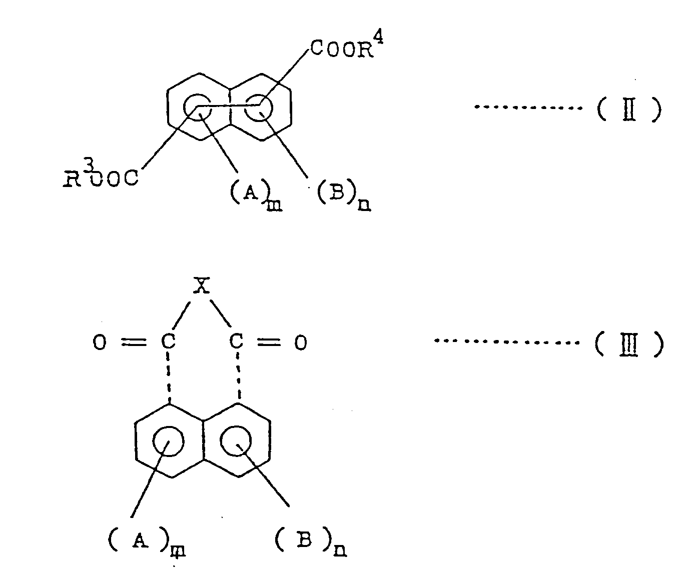 worin X ein Sauerstoffatom oder eine Gruppe NR⁵, in der R⁵ eine(s) der für R¹ und R² in Anspruch 3 aufgeführten Atome oder Gruppen ist, darstellt; R³ und R⁴, welche gleich oder verschieden sein können, ein Wasserstoffatom, ein Halogenatom, eine Alkylgruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellen; A und B, welche gleich oder verschieden sein können, ein Halogenatom, eine Hydroxylgruppe, eine Aminogruppe, eine Nitrogruppe, eine Cyanogruppe, eine Sulfonsäuregruppe oder ein Metallsalz derselben, eine Carboxylgruppe, eine Alkylgrupe, welche substituiert sein kann, eine Alkoxygruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellen; m und n jeweils 0 oder eine ganze Zahl von 1 bis 3 sind, und m + n 0 oder eine ganze Zahl von 1 bis 6 ist; und die Säureanhydridgruppe oder -Imidgruppe der Formel
-C (=0) - X - C (=0)-
einen Ring zu der der 1,8-Position, der 2,3-Position oder der 3,4-Position des Naphthalinrings der Formel (III) bildet.

13. Verwendung nach Anspruch 12, wobei die Naphthalindicarbonsäure oder das Derivat derselben, die durch die Formel (II) oder (III) dargestellt werden, eine Verbindung ist, in welcher m und n beide Null sind; R³ und R⁴ der Formel (II) jeweils unabhängig ein Wasserstoffatom oder eine C₁-C₄-Alkylgruppe sind; und R⁵ der Formel (III) ein Wasserstoffatom, eine Hydroxylgruppe oder eine Alkylgruppe, welche substituiert sein kann, ist.

14. Verwendung nach Anspruch 13, wobei die Naphthalindicarbonsäure oder das Derivat derselben Naphthalin-2,6-dicarbonsäure, Naphthalin-2,7-dicarbonsäure, Naphthalin-2,3-dicarbonsäure, Naphthalin-1,4-dicarbonsäure oder ein Alkylester einer dieser vier Säuren ist.

15. Verwendung nach einem der Ansprüche 11 bis 15, wobei die Zusammensetzung zwischen 0,01 und 10 Gewichtsteile Naphthalindicarbonsäure oder Derivat derselben pro 100 Gewichtsteile thermoplastisches Polyesterharz enthält.

16. Verwendung nach einem der vorangehenden Ansprüche, wobei die Zusammensetzung in Form eines Films oder einer Folie vorliegt.

17. Zusammensetzung von thermoplastischem Harz, worin
a) das thermoplastische Harz im wesentlichen aus (i) einer Dicarbonsäure-Komponente bestehend aus Einheiten, die von Terephthalsäure abgeleitet sind, und wahlweise zu nicht mehr als 20 Mol% aus Einheiten, die von anderen aromatischen Dicarbonsäuren, Estern von aromatischen Dicarbonsäuren, cycloaliphatischen Dicarbonsäuren oder Estern derselben aliphatischen Dicarbonsäuren oder Estern derselben, oder ungesättigten Dicarbonsäuren oder Estern derselben abgeleitet sind; sowie (ii) einer Glykol-Komponente bestehend aus Einheiten, die von Ethylenglykol abgeleitet sind, und wahlweise zu nicht mehr als 20 Mol% aus Einheiten, die von anderen aliphatischen Glykolen, cycloaliphatischen Glykolen, Bisphenolderivaten oder Glykolen der Formel ⁅(CH₂)ₙO⁆ₘ, worin n eine ganze Zahl von 1 bis 6 und m eine ganze Zahl von nicht weniger als 4 ist; besteht, und
b) ein Imid einer Naphthalintetracarbonsäure in einer Menge vorliegt, die effektiv ist, um als UV-Absorber zu wirken, wobei der Naphthalinring des Imids unsubstituiert ist oder durch bis zu 4 Substituenten substituiert ist, welche aus einem Halogenatom, einer Hydroxylgruppe, einer Nitrogruppe, einer Cyanogruppe, einer Carboxylgruppe, einer Sulfonsäuregruppe oder einem Salz derselben, einer Alkylgruppe, welche subsitutiert sein kann, einer Alkoxygruppe, welche substituiert sein kann, einer Alkenylgruppe, welche substituiert sein kann, einer Arylgruppe, welche substituiert sein kann, einer Aralkylgruppe, welche substituiert sein kann, und einer Alkylaralkylgruppe, welche substituiert sein kann, ausgewählt sind.

18. Zusammensetzung nach Anspruch 1, wobei das Imid von Naphthalintetracarbonsäure Naphthalin-1,4,5,8-tetracarboxydiimid der Formel (I) ist: 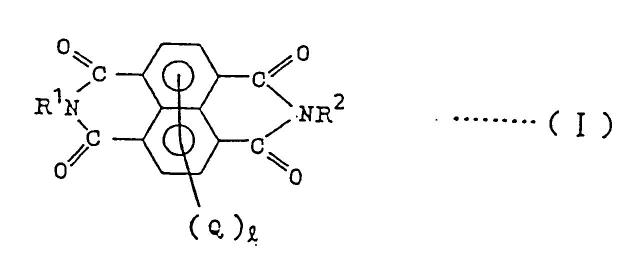 worin R¹ und R², welche gleich oder verschieden sein können, ein Wasserstoffatom, ein Halogenatom, eine Hydroxylgruppe, eine Alkylgruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellen; Q ein Halogenatom, eine Hydroxylgruppe, eine Nitrogruppe, eine Cyanogruppe, eine Carboxylgruppe, eine Sulfonsäuregruppe oder ein Salz derselben, eine Alkylgruppe, welche substituiert sein kann, eine Alkoxygruppe, welche substituiert sein kann, eine Alkenylgruppe, welche substituiert sein kann, eine Acylgruppe, welche substituiert sein kann, eine Aralkylgruppe, welche substituiert sein kann, oder eine Alkylaralkylgruppe, welche substituiert sein kann, darstellt, und ℓ gleich 0 oder eine ganze Zahl von 1 bis 4 ist.

19. Zusammensetzung nach Anspruch 18, wobei das Naphthalin-1,4,5,8-tetracarboxydiimid der Formel (I) eine Verbindung ist, in der R¹ und R² jeweils eine C₁-C₄-Alkylgruppe, die durch (eine) Carboxylgruppe(n) oder (eine) Hydroxylgruppe(n) substituiert ist, darstellen, und ℓ gleich 0 ist.

20. Zusammensetzung nach Anspruch 19, wobei das Naphthalin-1,4,5,8-tetracarboxydiimid N,N'-Bis(α-Carboxymethyl)-naphthalin-1,4,5,8-tetracarboxydiimid, N,N'-Bis(β-Carboxymethyl)-naphthalin-1,4,5,8-tetracarboxydiimid, N,N'-Bis(β-Carboxyethyl)-napthhalin-1,4,5,8-tetracarboxydiimid oder N,N'-Bis(β-Hydroxyethyl)-naphthalin-1,4,5,8-tetracarboxydiimid ist.

21. Zusammensetzung nach einem der Ansprüche 17 bis 20, wobei das Imid in einer Menge von 0,001 bis 20 Gewichtsteilen pro 100 Gewichtsteile thermoplastisches Polyesterharz verwendet wird.

22. Zusammensetzung nach Anspruch 21, wobei das Imid in einer Menge von 0,005 bis 10 Gewichtsteilen pro 100 Gewichtsteile thermoplastisches Polyesterharz verwendet wird.

23. Zusammensetzung nach einem der Ansprüche 17 bis 22, wobei das thermoplastische Polyesterharz Polyethylenterephthalat ist.

24. Zusammensetzung nach einem der Ansprüche 17 bis 23, welche durch Zugabe des Imids während der Polymerisation des thermoplastischen Polyesterharzes gebildet wird.

25. Zusammensetzung nach einem der Ansprüche 17 bis 23, welche durch Zugabe des Imids zu dem thermoplastischen Polyesterharz nach der Polymerisation des Harzes gebildet wird.

26. Zusammensetzung nach einem der Ansprüche 17 bis 25, welche nicht weniger als 0,001 Gewichtsteile mindestens einer der Verbindungen Naphthalindicarbonsäure oder Derivat derselben pro 100 Gewichtsteile thermoplastisches Polyesterharz enthält.

27. Zusammensetzung nach Anspruch 26, wobei die Naphthalindicarbonsäure oder das Derivat derselben eine Verbindung ist, die durch die Formel (II) oder die Formel (III) dargestellt wird: 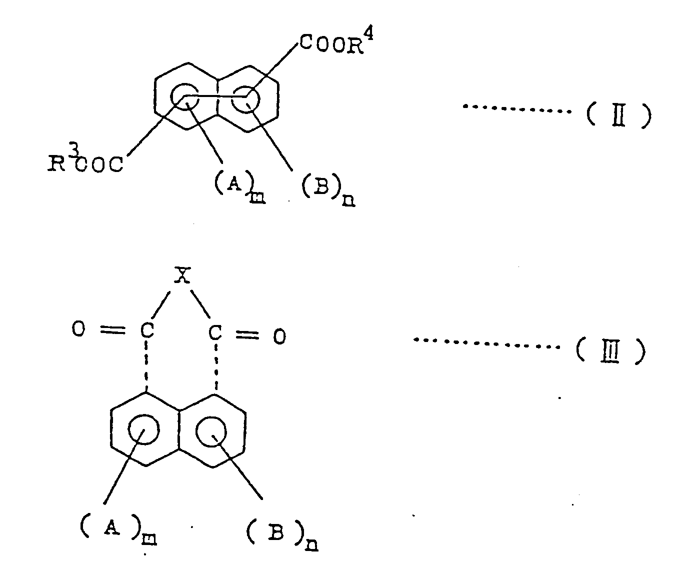 worin X ein Sauerstoffatom oder eine Gruppe NR⁵, in der R⁵ eines der Atome oder eine der Gruppen ist, die für R¹ und R² in Anspruch 3 aufgeführt sind, darstellt; R³ und R⁴, welche gleich oder verschieden sein können, ein Wasserstoffatom, ein Halogenatom, eine Alkylgruppe, welche substituiert sein kann, eine Alkenylgruppe, welche substituiert sein kann, eine Arylgruppe, welche substituiert sein kann, eine Aralkylgruppe, welche substituiert sein kann, oder eine Alkylaralkylgruppe, welche substituiert sein kann, darstellen; A und B, welche gleich oder verschieden sein können, ein Halogenatom, eine Hydroxylgruppe, eine Aminogruppe, eine Nitrogruppe, eine Cyanogruppe, eine Sulfonsäuregruppe oder ein Salz derselben, eine Carboxylgruppe, eine Alkylgruppe, welche substituiert sein kann, eine Alkoxygruppe, welche substituiert sein kann, eine Alkenylgruppe, welche substituiert sein kann, eine Arylgruppe, welche substituiert sein kann, eine Aralkylgruppe, welche substituiert sein kann oder eine Alkylaralkylgruppe, welche substituiert sein kann, darstellen; m und n jeweils 0 oder eine ganze Zahl von 1 bis 3 sind und m + n gleich 0 oder eine ganze Zahl von 1 bis 6 ist; und die Säureanhydridgruppe oder Imidgruppe der Formel
- C (=0) - X - C (=0) -
an der 1,8-Position, der 2,3-Position oder 3,4-Position des Naphthalinrings der Formel (III) einen Ring bildet.

28. Zusammensetzung nach Anspruch 27, wobei die Naphthalindicarbonsäure oder ein Derivat derselben, welche durch die Formel (II) oder die Formel (III) dargestellt werden, eine Verbindung ist, in welcher m und n beide Null sind; R³ und R⁴ der Formel (II) jeweils unabhängig ein Wasserstoffatom oder eine C₁-C₄-Alkylgruppe sind; und R⁵ der Formel (III) ein Wasserstoffatom, eine Hydroxylgruppe oder eine Alkylgruppe, welche substituiert sein kann, ist.

29. Zusammensetzung nach Anspruch 28, wobei die Naphthalindicarbonsäure oder ein Derivat derselben Naphthalin-2,6-dicarbosäure, Naphthalin-2,7-dicarbonsäure, Naphthalin-2,3-dicarbonsäure, Naphthalin-1,4-dicarbonsäure oder ein Alkylester einer dieser vier Säuren ist.

30. Zusammensetzung nach einem der Ansprüche 26 bis 29, welche 0,01 bis 10 Gewichtsteile Naphthalindicarbonsäure oder Derivat derselben pro 100 Gewichtsteile thermoplastisches Polyesterharz enthält.

31. Zusammensetzung nach einem der Ansprüche 17 bis 30, welche in Form eines Films oder einer Folie vorliegt.

32. Verfahren zur Herstellung eines Behälters, wobei das Verfahren die Formung eines Behälters aus einer Zusammensetzung eines thermoplastischen Polyesterharzes umfaßt, die mindestens eine der Verbindungen Naphthalintetracarbonsäure, näureanhydrid derselben, Imid derselben oder Ester derselben, wie in einem der Ansprüche 1 bis 16 definiert, enthält.

33. Verfahren nach Anspruch 32, wobei der Behälter eine Flasche ist.

## Revendications

1. Utilisation d'au moins un acide naphtalènetétracarboxylique, d'un anhydride d'acide dérivé de celui-ci, d'un imide de celui-ci ou d'un ester de celui-ci comme agent d'arrêt d'ultraviolet, dans une composition à base de résine de polyester thermoplastique.

2. Utilisation selon la revendication 1, dans laquelle l'acide naphtalènetétracarboxylique, est l'acide naphtalène-1,4,5,8-tétracarboxylique, l'acide naphtalène-1,3,5,7-tétracarboxylique, l'acide naphtalène-1,3,6,8-tétracarboxylique, l'acide naphtalène-1,2,4,5-tétracarboxylique, l'acide naphtalène-2,3,6,7-tétracarboxylique, l'acide naphtalène-1,2,5,6-tétracarboxylique ou l'acide naphtalène-1,4,6,7-tétracarboxylique.

3. Utilisation selon la revendication 1, dans laquelle l'imide d'acide naphtalènetétracarboxylique, est le naphtalène-1,4,5,8-tetracarboxydiimide de formule (1) : 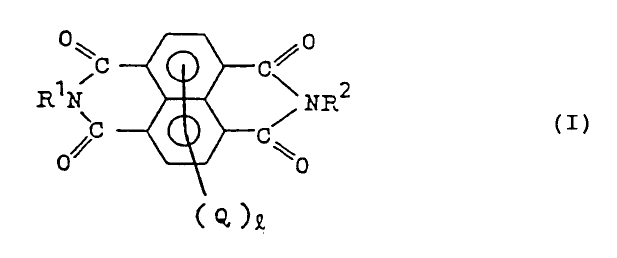 dans laquelle R¹ et R², qui peuvent être identiques ou différents, représentent chacun un atome d'hydrogène, un atome d'halogène, un groupe hydroxyle, un groupe alkyle qui peut être substitué, un groupe alkényle qui peut être substitué, un groupe aryle qui peut être substitué, un groupe aralkyle qui peut être substitué ou un groupe alkylaralkyle qui peut être substitué ; Q représente un atome d'halogène, un groupe hydroxyle, un groupe amino, un groupe nitro, un groupe cyano, un groupe carboxyle, un groupe acide sulfonique ou un sel de celui-ci, un groupe alkyle qui peut être substitué, un groupe alkoxy qui peut être substitué, un groupe alkényle qui peut être substitué, un groupe aryle qui peut être substitué, un groupe aralkyle qui peut être substitué, ou un groupe alkylaralkyle qui peut être substitué, et 1 est égal à 0 ou à un entier de 1 à 4.

4. Utilisation selon la revendication 3, dans laquelle le naphtalène-1,4,5,8-tétracarboxydiimide de formule (I), est un composé dans lequel les groupes R¹ et R² représentent chacun un groupe alkyle en C₁-C₄ substitué avec un ou plusieurs groupes carboxyle ou un ou plusieurs groupes hydroxyle, et 1 est égal à 0.

5. Utilisation selon la revendication 4, dans laquelle le naphtalène-1,4,5,8-tétracarboxydiimide, est le N,N'-bis(α-carboxyméthyl)-naphtalène-1,4,5,8-tétracarboxydiimide, le N,N'-bis(β-carboxyéthyl)-naphtalène-1,4,5,8-tétracarboxydiimide ou le N,N'-bis(β-hydroxyéthyl)naphtalène-1,4,5,8-tétracarboxydiimide.

6. Utilisation selon l'une quelconque des revendications précédentes, dans laquelle l'acide naphtalènetétracarboxylique, son anhydride d'acide, son imide ou son ester, est employé selon une quantité allant de 0,001 à 20 parties en poids pour 100 parties en poids de la résine de polyester thermoplastique.

7. Utilisation selon la revendication 6, dans laquelle l'acide naphtalènetétracarboxylique, son anhydride d'acide, son imide ou son ester, est employé selon une quantité allant de 0,005 à 10 parties en poids pour 100 parties en poids de la résine de polyester thermoplastique.

8. Utilisation selon l'une quelconque des revendications précédentes, dans lesquelles la résine de polyester thermoplastique est le polytéréphtalate d'éthylène.

9. Utilisation selon l'une quelconque des revendications précédentes, dans laquelle la composition est formée par addition du ou de chaque acide naphtalènetétracarboxylique, de son anhydride d'acide, de son imide ou de son ester, au moment de la polymérisation de la résine de polyester thermoplastique.

10. Utilisation selon l'une quelconque des revendications 1 à 8, dans laquelle la composition est formée par addition du ou de chaque acide naphtalènetétracarboxylique, de son anhydride d'acide, de son imide ou de son ester, dans la résine de polyester thermoplastique, après la polymérisation de cette résine.

11. Utilisation selon l'une quelconque des revendications précédentes, dans laquelle la composition comprend en outre, pas moins de 0,001 partie en poids d'au moins un acide naphtalènedicarboxylique ou d'un dérivé de celui-ci, pour 100 parties en poids de la résine de polyester thermoplastique.

12. Utilisation selon la revendication 11, dans laquelle l'acide naphtalènedicarboxylique ou son dérivé, est un composé représenté par la formule (II) ou la formule (III) : 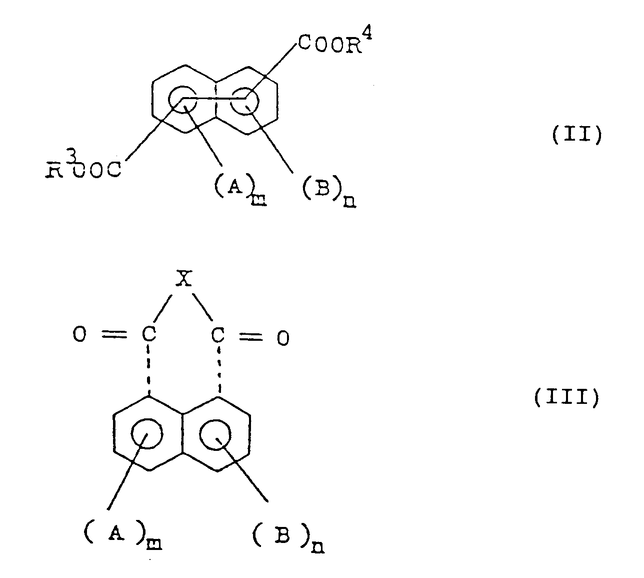 dans lesquelles X représente un atome d'oxygène ou un groupe NR⁵ dans lequel R⁵ représente l'un des atomes ou des groupes mentionnés dans le cas de R¹ et R² dans la revendication 3 ; R³ et R⁴, qui peuvent être identiques ou différents, représentent chacun un atome d'hydrogène, un atome d'halogène, un groupe alkyle qui peuvent être substitués, un groupe alkényle qui peut être substitué, un groupe aryle qui peut être substitué, un groupe aralkyle qui peut être substitué, ou un groupe alkylaralkyle qui peut être substitué ; A et B qui peuvent être identiques ou différents, représentent chacun un atome d'halogène, un groupe hydroxyle, un groupe amino, un groupe nitro, un groupe cyano, un groupe acide sulfonique ou un sel métallique de celui-ci, un groupe carboxyle, un groupe alkyle qui peut être substitué, un groupe alkoxy qui peut être substitué, un groupe alkényle qui peut être substitué, un groupe aryle qui peut être substitué, un groupe aralkyle qui peut être substitué, ou un groupe alkylaralkyle qui peut être substitué ; m et n sont respectivement égaux à 0 ou à un entier de 1 à 3, et m + n est égal à 0 ou à un entier de 1 à 6 ; et le groupe anhydride d'acide ou le groupe amide de formule :
-C(=O)- X - C(=O)-
forme un cycle aux positions 1 et 8, aux positions 2 et 3 ou aux positions 3 et 4 du noyau naphtalène de formule (III).

13. Utilisation selon la revendication 12, dans laquelle l'acide naphtalènedicarboxylique ou son dérivé représenté par la formule (II) ou (III), est un composé dans lequel m et n sont tous les deux égaux à 0 ; chacun des groupes R³ et R⁴ de la formule (II), représente indépendamment un atome d'hydrogène ou un groupe alkyle en C₁-C₄ ; et le groupe R⁵ de la formule (III), représente un atome d'hydrogène, un groupe hydroxyle ou un groupe alkyle qui peut être substitué.

14. Utilisation selon la revendication 13, dans laquelle l'acide naphtalènedicarboxylique ou son dérivé, est l'acide naphtalène-2,6-dicarboxylique, l'acide naphtalène-2,7-dicarboxylique, l'acide naphtalène-2,3-dicarboxylique, l'acide naphtalène-1,4-dicarboxylique, ou un ester alkylique de l'un de ces quatre acides.

15. Utilisation selon l'une quelconque des revendications 11 à 14, dans laquelle la composition comprend de 0,01 à 10 parties en poids de l'acide naphtalènedicarboxylique ou de son dérivé, pour 100 parties en poids de la résine de polyester thermoplastique.

16. Utilisation selon l'une quelconque des revendications précédentes, dans laquelle la composition est sous la forme d'un film ou d'une feuille.

17. Composition à base de résine de polyester thermoplastique, dans laquelle :
(a) la résine de polyester thermoplastique consiste essentiellement (i) en un composant dérivé d'acide dicarboxylique consistant en motifs dérivés d'acide téréphtalique, et éventuellement en pas plus de 20 moles % de motifs dérivés d'autres acides dicarboxyliques aromatiques, d'esters d'acides dicarboxyliques aromatiques, d'acides dicarboxyliques cycloaliphatiques ou d'esters de ceux-ci, d'acides dicarboxyliques aliphatiques ou d'esters de ceux-ci, ou d'acides dicarboxyliques insaturés ou d'esters de ceux-ci, et (ii) en un composant dérivé de glycol consistant en motifs dérivés de l'éthylène glycol, et éventuellement en pas plus de 20 moles % de motifs dérivés d'autres glycols aliphatiques, glycols cycloaliphatiques, dérivés de bisphénol ou glycols représentés par la formule ⁅(̵CH₂)̵ₙO⁆ₘ dans laquelle n est un entier de 1 à 6, et m est un entier non inférieur à 4 ; et
(b) un imide dérivé d'un acide naphtalènetétracarboxylique est présent selon une quantité efficace pour agir comme agent d'arrêt d'ultraviolet, le noyau naphtalène de cet imide, étant non substitué ou substitué avec jusqu'à 4 substituants choisis parmi un atome d'halogène, un groupe hydroxyle, un groupe nitro, un groupe cyano, un groupe carboxyle, un groupe acide sulfonique ou un sel de celui-ci, un groupe alkyle qui peut être substitué, un groupe alkoxy qui peut être substitué, un groupe alkényle qui peut être substitué, un groupe aryle qui peut être substitué, un groupe aralkyle qui peut être substitué, et un groupe alkylaralkyle qui peut être substitué.

18. Composition selon la revendication 17, dans laquelle l'imide dérivé d'acide naphtalènetétracarboxylique, est le naphtalène-1,4,5,8-tétracarboxydiimide de formule (I) : 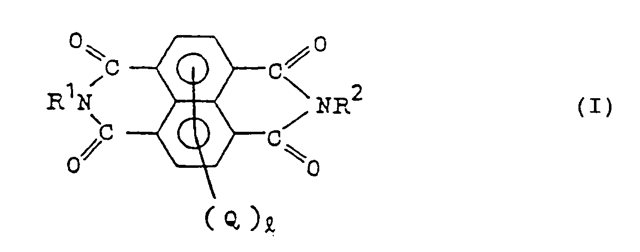 dans laquelle R¹ et R² qui peuvent être identiques ou différents, représentent chacun un atome d'hydrogène, un atome d'halogène, un groupe hydroxyle, un groupe alkyle qui peut être substitué, un groupe alkényle qui peut être substitué, un groupe aryle qui peut être substitué, un groupe aralkyle qui peut être substitué ou un groupe alkylaralkyle qui peut être substitué ; Q représente un atome d'halogène, un groupe hydroxyle, un groupe nitro, un groupe cyano, un groupe carboxyle, un groupe acide sulfonique ou un sel de celui-ci, un groupe alkyle qui peut être substitué, un groupe alkoxy qui peut être substitué, un groupe alkényle qui peut être substitué, un groupe aryle qui peut être substitué, un groupe aralkyle qui peut être substitué ou un groupe alkylaralkyle qui peut être substitué, et 1 est égal à 0 ou à un entier de 1 à 4.

19. Composition selon la revendication 18, dans laquelle le naphtalène-1,4,5,8-tétracarboxydiimide représenté par la formule (I), est un composé dans lequel R¹ et R² représentent chacun un groupe alkyle en C₁-C₄ substitué avec un ou plusieurs groupes carboxyle ou un ou plusieurs groupes hydroxyle, et 1 est égal à 0.

20. Composition selon la revendication 19, dans laquelle le naphtalène-1,4,5,8-tétracarboxydiimide, est le N,N'-bis(α-carboxyméthyl)-naphtalène-1,4,5,8-tétracarboxydiimide, le N,N'-bis(β-carboxyéthyl)-naphtalène-1,4,5,8-tétracarboxydiimide ou le N,N'-bis(β-hydroxyéthyl)naphtalène-1,4,5,8-tétracarboxydiimide.

21. Composition selon l'une quelconque des revendications 17 à 20, dans laquelle l'imide est employé selon une quantité de 0,001 à 20 parties en poids pour 100 parties en poids de la résine de polyester thermoplastique.

22. Composition selon la revendication 21, dans laquelle l'imide est employé selon une quantité de 0,005 à 10 parties en poids pour 100 parties en poids de la résine de polyester thermoplastique.

23. Composition selon l'une quelconque des revendications 17 à 22, dans laquelle la résine de polyester thermoplastique est le polytéréphtalate d'éthylène.

24. Composition selon l'une quelconque des revendications 17 à 23, formée par addition de l'imide au moment de la polymérisation de la résine de polyester thermoplastique.

25. Composition selon l'une quelconque des revendications 17 à 23, dans laquelle la composition est formée par addition de l'imide, dans la résine de polyester thermoplastique, après la polymérisation de cette résine.

26. Composition selon l'une quelconque des revendications 17 à 25, contenant également pas moins de 0,001 partie en poids d'au moins un acide naphtalènedicarboxylique ou d'un dérivé de celui-ci, pour 100 parties en poids de la résine de polyester thermoplastique.

27. Composition selon la revendication 26, dans laquelle l'acide naphtalènedicarboxylique ou son dérivé, est un composé représenté par la formule (II) ou la formule (III) : 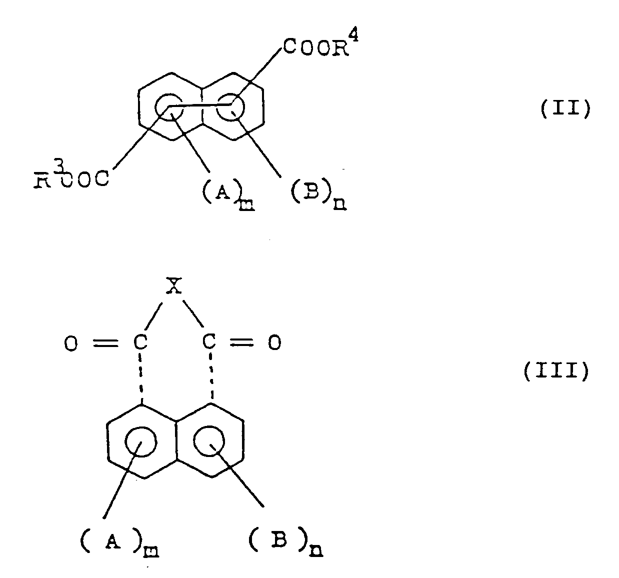 dans lesquelles X représente un atome d'oxygène ou un groupe NR⁵ dans lequel R⁵ représente l'un des atomes ou groupes mentionnés dans le cas des groupes R¹ et R² dans la revendication 3 ; R³ et R⁴ qui peuvent être identiques ou différents, représentent chacun un atome d'hydrogène, un atome d'halogène, un groupe alkyle qui peut être substitué , un groupe alkényle qui peut être substitué, un groupe aryle qui peut être substitué, un groupe aralkyle qui peut être substitué ou un groupe alkylaralkyle qui peut être substitué ; A et B, qui peuvent être identiques ou différents, représentent chacun un atome d'halogène, un groupe hydroxyle, un groupe amino, un groupe nitro, un groupe cyano, un groupe acide sulfonique ou un sel métallique de celui-ci, un groupe carboxyle, un groupe alkyle qui peut être substitué, un groupe alkoxy qui peut être substitué, un groupe alkényle qui peut être substitué, un groupe aryle qui peut être substitué, un groupe aralkyle qui peut être substitué ou un groupe alkylaralkyle qui peut être substitué ; m et n sont respectivement égaux à 0 ou à un entier de 1 à 3, et m + n est égal à 0 ou à un entier de 1 à 6 ; et le groupe anhydride d'acide ou le groupe imide de formule :
-C(=O)- X - C(=O)-
forme un cycle aux positions 1 et 8, aux positions 2 et 3 ou aux positions 3 et 4 du noyau naphtalène de formule (III).

28. Composition selon la revendication 27, dans laquelle l'acide naphtalènedicarboxylique ou son dérivé représenté par la formule (II) ou (III), est un composé dans lequel m et n sont tous les deux égaux à 0 ; chacun des groupes R³ et R⁴ de la formule (II), représente indépendamment un atome d'hydrogène ou un groupe alkyle en C₁-C₄ ; et R⁵ dans la formule (III) représente un atome d'hydrogène, un groupe hydroxyle ou un groupe alkyle qui peut être substitué.

29. Composition selon la revendication 28, dans laquelle l'acide naphtalènedicarboxylique ou son dérivé, est l'acide naphtalène-2,6-dicarboxylique, l'acide naphtalène-2,7-dicarboxylique, l'acide naphtalène-2,3-dicarboxylique, l'acide naphtalène-1,4-dicarboxylique, ou un ester alkylique de l'un de ces quatre acides.

30. Composition selon l'une quelconque des revendications 26 à 29, qui contient de 0,01 à 10 parties en poids de l'acide naphtalènedicarboxylique ou d'un dérivé de celui-ci, pour 100 parties en poids de la résine de polyester thermoplastique.

31. Composition selon l'une quelconque des revendications 17 à 30, qui est sous la forme d'un film ou d'une feuille.

32. Procédé de préparation d'un récipient, selon lequel on forme le récipient à partir d'une composition à base de résine de polyester thermoplastique comprenant au moins un acide naphtalènetétracarboxylique, un anhydride d'acide de celui-ci, un imide ou un ester de celui-ci, selon l'une quelconque des revendications 1 à 16.

33. Procédé selon la revendication 32, dans lequel le récipient est une bouteille.
